# EUROPEAN PATENT SPECIFICATION

(11) **EP 1 332 953 B1**
(45) Date of publication and mention of the grant of the patent: **15.11.2006**
(21) Application number: 03380016.0
(22) Date of filing: 31.01.2003
(51) Int. Cl.: B62D 61/12, B60G 11/46

(54) **Fixing device for travelling axle lifters in industrial vehicles, trailers and semi-trailers**
Halterung für eine Achsanhebevorrichtung in einem Nutzfahrzeug, einem Anhänger oder einem Sattelanhänger
Dispositif de fixation pour dispositif de relevage d'essieu pour véhicule industriel, remorque ou semi-remorque

(30) Priority: 31.01.2002 ES 200200236
(43) Date of publication of application: 06.08.2003
(73) Proprietor: Losada Alvarez, Agueda, 50003 Zaragoza (ES)
(72) Inventor: Losada Alvarez, Agueda, 50003 Zaragoza (ES)
(74) Representative: PROPI, S.L.

(56) References cited:
- EP-A- 0 431 673
- EP-A- 0 836 984
- EP-A- 0 941 915

## Description

### OBJECT OF THE INVENTION

The present invention refers to a fixing device for the lift of a rolling axle of an industrial vehicle, trailer and semi-trailer, when it is a multi-axle, such that said lift makes the rolling axle operative or inoperative during transport, depending on whether the collaboration of the corresponding wheels is necessary or not.

### BACKGROUND OF THE INVENTION

In many industrial vehicles, trailers or semi-trailers, hereinafter "industrial vehicle", with several axles, for the purpose of facilitating the turning of said industrial vehicle and preventing the unnecessary wear of at least the wheels corresponding to one of said axles, when the vehicle is traveling with no load, said axle is normally provided with a lift capacitated for adopting two working positions, one in which the wheels corresponding to said axle are supported on the ground, in the same manner as the wheels of the remaining axles, and another in which they are lifted too much, losing contact with the ground and being inoperative.

There are different types of lifts on the market which essentially consist of, as from a leaf spring arm which joined to the axle to be elevated, a pneumatic or hydraulic shock absorber regulating the functional position of the axle, and on the end thereof, a support associated with the pneumatic suspension which, through a lift swivel-mounted thereon, acts on a bellows, rubber or membrane, which upwardly pushes the leaf spring arm, lifting it and consequently also lifting the axle associated therewith with the subsequent separation of the corresponding wheels from the ground.

The fundamental drawback that these systems have is based on the fact that the wheels of the truck must be perfectly aligned, said leaf spring arm must therefore be perfectly aligned with its support or kingpin. Given that in practice and upon trying to assemble a conventional lift on said support, it is necessary to release the pin through which said support is coupled to the leaf spring arm, in this operation, said alignment is lost between the support and leaf spring arm, thus losing the alignment of the axle with regard to said kingpin, making it tremendously difficult and costly to realign the assembly, in addition to unsafe.

The applicant is the holder of Spanish patent application ES 2,008,498, which discloses a mechanism for centering and lifting the self-supported bodies on an automobile chassis, a patent which shows a solution that is structurally similar to the aforementioned ones which also uses a bellows system, as shown in the embodiment of figure 5, with the only exception being that it is intended for lifting the transport bodies, as previously mentioned, rather than being intended to lift a rolling and mobile axle, but being equally applicable to the latter.

The European patent application EP 0 941 915 A1 discloses a fixing device for a lifting means for lifting rolling axles of industrial vehicles, trailers and semi-trailers, said lifting means being suitable for acting on a leaf spring arm associated with the rolling axle to be lifted, said leaf spring arm being swivel-mounted on a support of the pneumatic suspension with the collaboration of a transversal pin, said fixing device comprising a support for the lifting means incorporating two upward side arms finished on their free end with respective arching in the form of a hook, the hooks being of the "hanger" type permitting coupling of said hooks to projecting parts protruding from the support of the pneumatic suspension in such a manner that the lifting means can be coupled to the support of the pneumatic suspension by simply hanging it on said projecting parts.

### DESCRIPTION OF THE INVENTION

The fixing device proposed by the invention proposes satisfactorily solving the aforementioned drawbacks, as well as permitting the assembly of the lift on the hinged coupling pin of the leaf spring arm to its support, with no need to disassemble said pin and, accordingly, without causing the misalignment of the assembly, which not only implies a considerable savings in time and operating complications as it is not necessary to disassemble said pin, but it also implies an economic savings in terms of both the time and materials used as it is not necessary to replace the reference pin, also implying greater safety.

A fixing device according to the invention comprises the features defined in claim 1.

More specifically, the invention consists of shaping the support of the lift on the basis of two side arms, stiffened together by means of the bellows itself constituting the lift and by means of a rear cross beam, like a spacer, with the special particularity that said side arms on their upper end are carried out with a hook shape, permitting coupling the support to the ends of the pin through which the leaf spring arm is hinged to its corresponding coupling to the vehicle chassis, in the protruding sectors of said pin and with no need to carry out any type of manipulation on them, thereby preventing risks of misalignment of the pin, of the leaf spring arm and, therefore, of the wheels with regard to the kingpin.

Depending on the specific needs of each case, it may be necessary to axially or radially over-dimension the ends of said pin for a better adjustment of the hook-shaped ends of the lift, the purpose for which it has been foreseen that said pin will collaborate with a pair of bushings, suitably fixable thereto, with dimensions suitable for the specific demands of each case.

The cross beam connecting the two side arms of the support and which acts as a spacer between them simultaneously acts as a limiting rocking stop for the support of the lift as it acts on the support of the leaf spring arm, for which purpose it has been foreseen that said side arms of the support of the lift incorporate several holes suitably distributed for allowing different assemblies of said cross beam, using in each case the one which is most suitable according to the type of support for the leaf spring arm the vehicle has.

### DESCRIPTION OF THE DRAWINGS

To complement the description that is being made and for the purpose of helping to better understand the features of the invention, according to a preferred embodiment example thereof, a set of drawings is attached as an integral part of said description which, with an illustrative and non-limiting character, show the following:

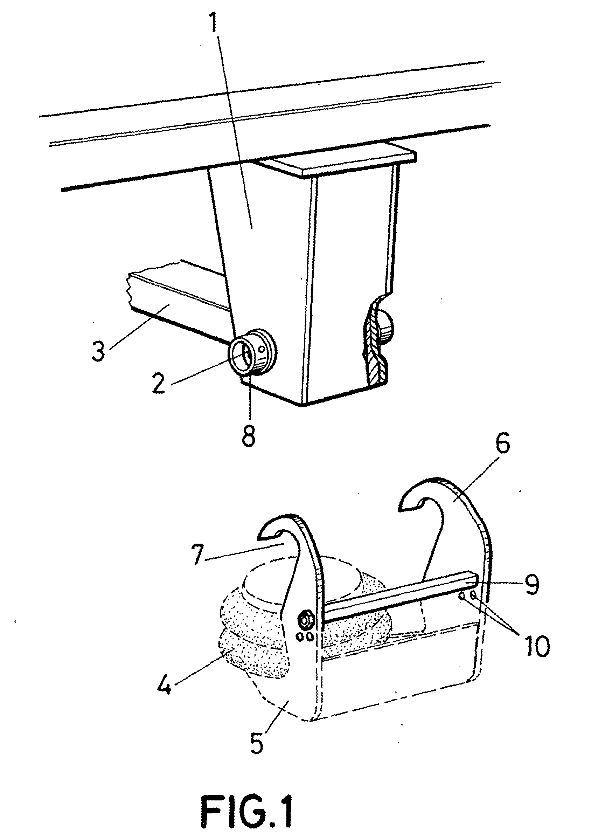

Figure 1 shows a perspective view of a fixing device for the lift of a rolling axle of industrial vehicles, trailers and the like, carried out for the purpose of the present invention, device which is duly facing the support of the leaf spring arm on which the lift is to act.
Figure 2 shows a side-elevational schematic representation of the previous figure, duly assembled.

### PREFERRED EMBODIMENT OF THE INVENTION

In the indicated figures, (1) gives reference to the support of the pneumatic suspension which, by means of a transversal pin (2), is hinged to the corresponding end of the leaf spring arm (3), constituting the holding means for the rolling axle of the industrial vehicle, trailer or semi-trailer intended to temporarily lift, for example with the collaboration of a bellows (4) which, established on the corresponding support (5) and upon receiving a pneumatic or hydraulic pressure from the vehicle, actuates on the leaf spring arm (3), causing the elevation of said rolling axle.

Then according to the invention, the support (5) is shaped such that in addition to duly holding the bellows (4), it incorporates two side and upward arms (6) spaced in correspondence with the width of the support (1) of the pneumatic suspension and with its free ends (7) shaped like a hook, which permit coupling them by the simple "hanger" type hook engagement to the ends of the pin (2) protruding with regard to the support (1) of the pneumatic suspension.

Coupling the hook-shaped ends (7) of the side arms (6) of the support (5) for the lift (4) can be done directly on the ends of the pin (2), or by doing so with the interposition of respective bushings (8) which axially lengthen and/or radially enlarge said free ends of the pin (2) in order to adapt them in the most optimal manner possible to the functioning of the lift.

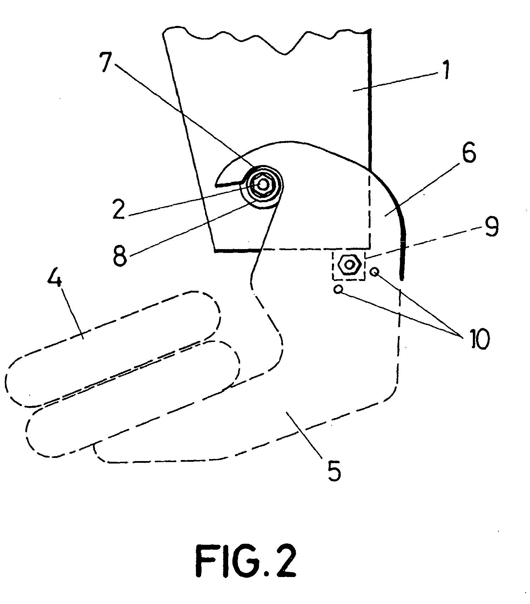

The side arms (6) of the support (5) can be mono-piece but in any case will incorporate a spacer (9) having the main function of establishing a rocking stop for the support (5) against the lower and free end of the support (1) of the pneumatic suspension, as can especially be seen in figure 2, with the special particularity that the spacer (9) is fixed to the arms (6) with the possibility of positional regulation, specifically with the cooperation of a plurality of holes (10) existing on said arms and selectively usable for fixing a spacer (9), the spacer can thereby vary its position in both height and in the transversal direction in order to adopt, at all times, the most suitable position according to the type of support (1) and with the most suitable position that, with regard to the same, the support (5) of the lift (4) must adopt. Alternately, depending on the needs, this spacer (9) can present equivalent solutions, such as tubular spacers or spacers like a rectangular prismatic pan.

In this manner, the support (5) tends to maintain, by simple gravity and in a stable and permanent manner, the borderline situation shown in figure 2 where the spacer (9) is supported on the lower end of the support (1) and on which the lift (4), supported on said support (5) is capable of lifting the leaf spring arm (3).

## Claims

1. A fixing device for a lifting means (4) for lifting rolling axles of industrial vehicles, trailers and semi-trailers,said lifting means (4) being suitable for acting on a leaf spring arm (3) associated with the rolling axle to be lifted, said leaf spring arm (3) being swivel-mounted on a support (1) of the pneumatic suspension with the collaboration of a transversal pin (2), said fixing device comprising a support (5) for the lifting means (4) incorporating two upward side arms (6), finished on their free end with respective arching in the form of a hook (7), the hooks (7) being of the "hanger" type permitting coupling of said hooks to projecting parts protruding from the support (1) of the pneumatic suspension in such a manner that the lifting means can be coupled to the support (1) of the pneumatic suspension by simply hanging it on said projecting parts **characterized in that** the projecting parts are constituted by the ends of the transversal pin (2) protruding from the support (1) of the pneumatic suspension.

2. A fixing device for a lifting means (4) according to claim 1, **characterized in that** the hook-shaped ends (7) of the side arms (6) of the support (5) of the lift (4) are coupled to the free ends of the pin (2) with the interposition of respective bushings (8), permitting increasing the axial and/or radial elevation of said ends of pin (2).

3. A fixing device for a lifting means (4) according to previous claims, **characterized in that** the between the upward arms (6) of the support (5) for the lift (4), which can be mono-piece, a spacer (9) with adjustable positioning is established depending on the limiting rocking stop of the support (5) on the lower end of the support (1) of the pneumatic suspension, having foreseen that said spacer (9) is fixed to the arms (6) with the collaboration of a plurality of holes (11) operatively established on the latter, permitting adjusting the positioning in both a vertical and transversal direction of the spacer (9) for its suitable adjustment to the features of the support (1) of the pneumatic suspension.

## Patentansprüche

1. Eine Befestigungsvorrichtung für ein Anhebemittel (4) zum Anheben von Rollachsen von Nutzfahrzeugen, Anhängern und Sattelaufliegern, wobei dieses Anhebemittel (4) geeignet ist, auf den mit der anzuhebenden Rollachse verbundenen Blattfederarm (3) einzuwirken, wobei der besagte Blattfederarm (3) auf dem Träger (1) der pneumatischen Aufhängung schwenkbar montiert ist, in Zusammenarbeit mit einem transversalen Stift (2), wobei die besagte Befestigungsvorrichtung einen Träger (5) für das Anhebemittel (4) umfasst, welches zwei nach oben gerichtete Seitenarme (6) inkorporiert, die an ihrem freien Ende jeweils mit einem Bogen in der Form eines Hakens (7) abgeschlossen sind, wobei die Haken (7) von der Art "Hängehaken" sind, welche die Verbindung dieser Haken mit den überstehenden Teilen gestatten, die von dem Träger (1) der pneumatischen Aufhängung in der Weise abstehen, dass das Anhebemittel mit dem Träger (1) der pneumatischen Aufhängung verbunden werden kann, indem es einfach an die besagten überstehenden Teile gehangen wird, **dadurch gekennzeichnet, dass** die überstehenden Teile aus den Enden des transversalen Stiftes (2) bestehen, die von dem Träger (1) der pneumatischen Aufhängung abstehen.

2. Eine Befestigungsvorrichtung für ein Anhebemittel (4) nach Anspruch 1, **dadurch gekennzeichnet, dass** die hakenförmigen Enden (7) der Seitenarme (6) des Trägers (5) des Anhebers (4) mit den freien Enden des Stiftes (2) verbunden sind, mit der Einfügung von entsprechenden Muffen (8), wodurch die Steigerung der axialen und/oder radialen Anhebung der besagten Enden des Stiftes (2) gestattet wird.

3. Eine Befestigungsvorrichtung für ein Anhebemittel (4) nach den vorherigen Ansprüchen, **dadurch gekennzeichnet, dass** zwischen den nach oben gerichteten Seitenarmen (6) des Trägers (5) für den Anheber (4), der aus einem Stück bestehen kann, ein Abstandshalter (9) mit justierbarer Positionierung eingerichtet ist, abhängig von dem begrenzenden Pendelstopper des Trägers (5) an dem unteren Ende des Trägers (1) der pneumatischen Aufhängung, wobei vorgesehen ist, dass der Abstandshalter (9) an den Armen (6) befestigt ist, in Zusammenarbeit mit einer Vielzahl von Löchern (11), die betriebsbereit auf den Letztgenannten eingerichtet sind, wodurch die Justierung der Positionierung des Abstandshalters (9) sowohl in vertikaler als auch in transversaler Richtung gestattet wird, für dessen geeignete Anpassung an die Leistungsmerkmale des Trägers (1) der pneumatischen Aufhängung.

## Revendications

1. Un dispositif de fixation pour un équipement de levage (4) pour lever des axes de roulement de véhicules industriels, des remorques ou des semi-remorques, ledit équipement de levage (4) étant adapté pour agir sur un bras de ressort à lame (3) associé à l'axe de roulement qui doit être levé, ledit bras de ressort à lame (3) étant monté sur pivot sur un support (1) de la suspension pneumatique avec la collaboration d'une cheville transversale (2), ledit dispositif de fixation comprenant un support (5) pour l'équipement de levage (4) comportant deux bras latéraux dirigés vers le haut (6) terminés à leur extrémité libre par une cambrure respective en forme de crochet (7), les crochets (7) étant des crochets de suspension ce qui permet le couplage desdits crochets aux parties en projection se prolongeant à partir du support (1) de la suspension pneumatique de telle manière que l'équipement de levage peut être couplé au support (1) de la suspension pneumatique par sa simple suspension sur lesdites parties en projection **caractérisé en ce que** les parties en projection sont constituées par les extrémités de la cheville transversale (2) se prolongeant à partir du support (1) de la suspension pneumatique.

2. Un dispositif de fixation pour un équipement de levage (4) selon la revendication 1, **caractérisé en ce que** les extrémités en forme de crochet (7) des bras latéraux (6) du support (5) de l'appareil élévateur (4) sont couplées aux extrémités libres de la cheville (2) avec l'interposition de bagues respectives (8), ce qui permet d'accroître l'élévation axiale et/ou radiale desdites extrémités de la cheville (2).

3. Un dispositif de fixation pour un équipement de levage (4) selon les revendications précédentes, **caractérisé en ce que** entre les bras dirigés vers le haut (6) du support (5) pour l'appareil élévateur (4), qui peut être composé d'une seule pièce, une entretoise (9) avec un positionnement ajustable est placée en fonction de la butée de limitation du basculement du support (5) sur l'extrémité inférieure du support (1) de la suspension pneumatique, ayant été prévu que ladite entretoise (9) est fixée aux bras (6) avec la collaboration d'une pluralité de trous (11) placés de façon opérationnelle sur cette dernière, ce qui permet d'ajuster le positionnement dans les deux directions verticale et transversale de l'entretoise (9) pour son ajustement adapté aux caractéristiques du support (1) de la suspension pneumatique.
